(19) Europäisches Patentamt
European Patent Office
Office européen des brevets

(11) Veröffentlichungsnummer : **0 037 892**
**B1**

(12) # EUROPÄISCHE PATENTSCHRIFT

(45) Veröffentlichungstag der Patentschrift : **13.07.83**

(51) Int. Cl.³ : **C 09 F 1/04**, D 21 H 3/34

(21) Anmeldenummer : **81101277.2**

(22) Anmeldetag : **23.02.81**

(54) **Harzsäureketene, Verfahren zu ihrer Herstellung und ihre Verwendung zur Hydrophobierung cellulosehaltiger Flächengebilde.**

(30) Priorität : **04.03.80 DE 3008161**

(43) Veröffentlichungstag der Anmeldung : **21.10.81 Patentblatt 81/42**

(45) Bekanntmachung des Hinweises auf die Patenterteilung : **13.07.83 Patentblatt 83/28**

(84) Benannte Vertragsstaaten : **AT BE CH DE FR GB IT LI LU NL SE**

(56) Entgegenhaltungen :
**FR A 1 195 295**
**US A 2 785 067**
**US A 2 901 371**

(73) Patentinhaber : **Klebstoffwerke Collodin Dr.Schultz & Nauth GmbH**
**Vilbeler Landstrasse 20**
**D-6000 Frankfurt 61 (Fechenheim) (DE)**

(72) Erfinder : **Schultz, Wolf-Stefan, Dr.-Ing.**
**Dieburger Strasse 21**
**D-6000 Frankfurt 61 (DE)**

(74) Vertreter : **Beil, Walter, Dr. et al**
**BEIL, WOLFF & BEIL Rechtsanwälte Adelonstrasse 58**
**D-6230 Frankfurt am Main 80 (DE)**

**EP 0 037 892 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Harzsäureketene, Verfahren zu ihrer Herstellung und ihre Verwendung zur Hydrophobierung cellulosehaltiger Flächengebilde

Die Erfindung betrifft Harzsäureketene, die durch Halogenierung eines mit einer carboxylgruppenhaltigen dienophilen Verbindung modifizierten Kolophoniums und Abspaltung von Halogenwasserstoff aus dem erhaltenen Acylhalogenid erhältlich sind, ein Verfahren zur Herstellung dieser Harzsäureketene und ihre Verwendung zur Hydrophobierung cellulosehaltiger Flächengebilde, insbesondere zur Leimung von Papier.

Bisher wurden zur Masseleimung und Hydrophobierung von Papier und anderen cellulosehaltigen Flächengebilden in erster Linie Kolophonium und modifiziertes bzw. verstärktes Kolophonium verwendet. Die Verstärkung von Kolophonium durch Umsetzen mit Maleinsäureanhydrid oder anderen dienophilen Verbindungen unter Erhöhung der Zahl der Carboxylgruppen im Kolophonium wurde z. B. von Casey in Pulp and Paper, 2. Auflage, Bd. II, Seiten 1043 bis 1066 und in den US-2 628 918 und 2 684 300 beschrieben.

Andererseits wurden auch bereits von höheren Fettsäuren abgeleitete Ketene und Ketendimere beschrieben, die in Form wäßriger Emulsionen als Mittel zum Leimen von Papier, und zwar sowohl zur Masseleimung als auch zur Oberflächenleimung, und somit zur Hydrophobierung der Papieroberfläche eingesetzt werden sollten (vgl. z. B. die US-2 627 477 und 2 901 371). Aus der DE-PS 1 148 130 sind auch bereits Ketendimere der Formel $[RCH = C = O]_2$ bekannt, worin R einen Aryl-, Aralkyl- oder Alkarylrest bedeuten sollte, die in Form einer wäßrigen Stärke-Ketendimer-Emulsion zum Leimen von Papier eingesetzt werden sollten.

Die bekannten Ketene bzw. Ketendimeren wurden aus den entsprechenden Säurechloriden unter Abspaltung von Chlorwasserstoff mit Hilfe eines geeigneten Säureakzeptors, wie Triethylamin, hergestellt. Aus Harzsäuren, wie Kolophonium, ließen sich jedoch keine Ketene herstellen, weil die Carboxylgruppe des Harzsäuremoleküls zwar in die Säurechloridgruppe umgewandelt werden kann, eine weitere Umwandlung in die Ketengruppe aber aus sterischen Gründen nicht erfolgt (man müßte zu diesem Zweck die zur Carboxylgruppe x-ständige Methylgruppe aus dem Molekül entfernen).

Der Erfindung liegt die Aufgabe zugrunde, Harzsäureketene bereitzustellen, die den Einsatz der leicht erhältlichen und billigen Harzsäuren als Ausgangsmaterialien ermöglichen und sowohl zur Masseleimung als auch zur Oberflächenleimung cellulosehaltiger Flächengebilde, insbesondere von Papier, verwendet werden können, wobei die Leimungseigenschaften verbessert werden.

Diese Aufgabe wird durch die in den Ansprüchen gekennzeichneten Harzsäureketene erfüllt. Die erfindungsgemäßen Harzsäureketene werden aus einem mit einer carboxylgruppenhaltigen dienophilen Verbindung modifizierten Kolophonium erhalten. Dieses modifizierte oder verstärkte Kolophonium wird durch die bekannte Umsetzung von Kolophonium mit einer dienophilen Verbindung nach Diels-Alder erhalten. Bei dieser Diels-Alder-Umsetzung von Kolophonium mit einer dienophilen Verbindung, wie z. B. Maleinsäure, Maleinsäureanhydrid, Fumarsäure, Acrylsäure, Itaconsäure, Citraconsäure oder deren Anhydride, entstehen Addukte mit einem Gehalt von 1 bis 30 Gew.-% an der als Addukt gebundenen dienophilen Verbindung, wobei die aus der Dienophilen Verbindung stammende Carboxylgruppe bzw. die aus der dienophilen Verbindung stammenden Carboxylgruppen im Gegensatz zu der ursprünglichen Carboxylgruppe der Harzsäuren in die Ketengruppe umgewandelt werden kann bzw. umgewandelt werden können.

Als Harzsäuren bzw. Kolophonium sind alle bekannten Kolophoniumarten, z. B. Tallöl-, Wurzel- oder Balsamharz oder deren Derivate verwendbar.

Bekanntlich wird angenommen, daß sich bei der Diels-Alder-Anlagerung von Maleinsäureanhydrid an Kolophonium (Abietinsäure) bei erhöhten Temperaturen von 100 bis 250 °C als Addukt Maleinopimarsäure der folgenden Formel bildet:

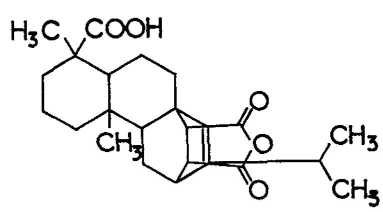

Bei der Umwandlung dieses Adduktes in das erfindungsgemäße Keten reagieren zunächst die aus dem Maleinsäureanhydrid stammenden Carboxylgruppen mit dem Chlorierungsmittel unter Bildung des Diacylchlorides

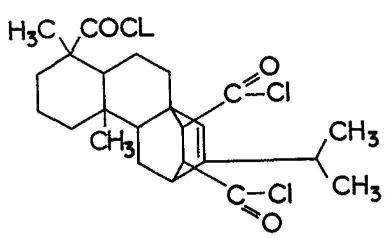

das sodann weiter unter Abspaltung von Chlorwasserstoff in das Diketen

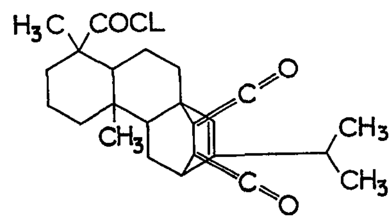

umgewandelt wird. Entsprechende Diketene und Ketene werden aus den Addukten der anderen dienophilen Verbindungen an die Harzsäuren erhalten. Je nach dem Gehalt des als Ausgangsmaterial verwendeten verstärkten Kolophoniums an der dienophilen Verbindung entstehen in jedem Fall Gemische von Harzsäuren mit Harzsäureketenen bzw. -diketenen.

Die Halogenierung des verstärkten Kolophoniums kann nach üblichen Verfahren zur Herstellung von Säurehalogeniden durchgeführt werden. Bevorzugte Halogenierungsmittel bzw. Chlorierungsmittel sind Thionylchlorid, Phosphortrichlorid oder Phosphorpentachlorid. Nach Entfernung des restlichen Halogenierungs- bzw. Chlorierungsmittels wird das Acylhalogenid bzw. Acylchlorid in einem organischen Lösungsmittel, wie Toluol, gelöst, worauf es in Gegenwart eines Halogenwasserstoffakzeptors unter Abspaltung von Halogenwasserstoff in das Keten umgewandelt wird. Als Halogenwasserstoffakzeptoren werden vorzugsweise tertiäre Amine eingesetzt. Besonders bevorzugte tertiäre Amine sind Triethylamin und Trimethylamin.

Die erfindungsgemäßen Harzsäureketene zeigen bei der Verwendung zur Hydrophobierung cellulosehaltiger Flächengebilde überraschende Eigenschaften, die nicht vorherzusehen waren.

Imprägniert man z. B. Papier oder ein anderes cellulosehaltiges Flächengebilde mit einer Lösung eines erfindungsgemäßen Harzsäureketens in einem organischen Lösungsmittel, z. B. chlorierten Kohlenwasserstoffen, wie Trichlorethylen oder Methylenchlorid, so erhält man wie bei der üblichen Harzleimung eine Hydrophobierung des Papiers, d. h. die Wasseraufnahme des Papiers ist geringer als die des nicht behandelten papiers. Im Unterschied zur Harzleimung ist die erhaltene Leimung jedoch nicht nur säurebeständig, sondern auch alkalifest. Diese Stabilität der Leimung über weite pH-Bereiche war nicht zu erwarten und erweitert die Anwendungsmöglichkeiten von geleimten cellulosehaltigen Flächengebilden, wie Papier.

Die folgenden Beispiele erläutern die Erfindung :

## Beispiel 1

A. Herstellung eines mit Maleinsäureanhydrid modifizierten Kolophoniumharzes

Ein Gemisch aus 300 Gewichtsteilen Kolophoniumharz (Tallharz der Säurezahl 165) und 30 Gewichtsteilen Maleinsäureanhydrid wurde zwei Stunden unter Rühren auf 180 °C erhitzt. Nach Beendigung der Umsetzung ließ man auf Raumtemperatur abkühlen.

B. Herstellung des Säurechlorides des modifizierten Kolophoniumharzes

50 Gewichtsteile des unter A erhaltenen Harzes wurden nach der allgemeinen Arbeitsvorschrift aus Organikum, 7 Aufl., VEB Deutscher Verlag der Wissenschaften Berlin 1967, Seite 409, mit 150 Gewichtsteilen Thionylchlorid versetzt und 10 Stunden stehengelassen. Anschließend wurde das überschüssige Thionylchlorid im Vakuum abgedampft.

C. Herstellung des Harzsäureketens

80 Gewichtsteile des unter B erhaltenen Harzsäurechlorides wurden in 150 Gewichtsteilen Toluol gelöst und mit 100 Gewichtsteilen Triethylamin versetzt. Das erhaltene Gemisch wurde 12 Stunden bei Raumtemperatur stehengelassen und anschließend filtriert, mit 0,5 %iger wäßriger Natriumbicarbonatlösung gewaschen und im Vakuum eingedampft. Die Ausbeute betrug 60 %.

Eine 5 %ige Lösung des erhaltenen Harzsäureketens in Methylenchlorid wurde mit Hilfe einer Leimpresse auf eine Papierbahn aus Zellstoff aufgetragen. Die erhaltene Imprägnierung war sowohl gegen Säuren als auch gegen Alkalien beständig.

Anwendung zur Masseleimung

Es wurden 20 g Zellstoff unter Rühren mit 1 % des vorstehenden Harzsäureketens versetzt, nachdem das Harzsäureketen zuvor in 20 ml Aceton gelöst worden war. Anschließend wurde ein übliches Farbstoff-Fixierungsmittel (unter dem eingetragenen Warenzeichen « Polymin » erhältliches Polyethyleniminderivat) in einer Konzentration von 0,25 %, bezogen auf Trockenzellstoff absolut, zugegeben. Mit der so angesetzten Pulpe wurden sodann Blätter gebildet. Mit den auf diese Weise erhaltenen Blättern wurden Tintendurchschlagszeiten (vgl. Merkblatt V/15/60 des Vereins der Zellstoff- und Papier-Chemiker und -Ingenieure) von 30 Minuten erreicht. Demgegenüber erreicht man bei einer üblichen Masseharzleimung, z. B. mit 2 % Harzleim, bezogen auf Trockengewicht absolut, unter Zusatz von Aluminiumsulfat lediglich Tintenschwimmdauern von 7 bis 10 Minuten für das geleimte Papier.

Beispiel 2

A. Herstellung eines mit Fumarsäure modifizierten Kolophoniumharzes

Ein Gemisch aus 300 Gewichtsteilen Kolophoniumharz (Tallharz der Säurezahl 165) und 21 Gewichtsteilen Fumarsäure wurde zwei Stunden unter Rühren auf 210 °C erhitzt. Nach Beendigung der Umsetzung wurde auf Raumtemperatur abgekühlt.

B. Herstellung des Säurechlorides des modifizierten Kolophoniumharzes

50 Gewichtsteile des unter A erhaltenen Harzes wurden nach der Arbeitsweise von Beispiel 1B mit 150 Gewichtsteilen Thionylchlorid versetzt und 10 Stunden stehengelassen. Anschließend wurde das überschüssige Thionylchlorid im Vakuum abgedampft.

C. Herstellung des Harzsäureketens

80 Gewichtsteile des unter B erhaltenen Harzsäurechlorides wurden in 150 Gewichtsteilen Toluol gelöst und mit 100 Gewichtsteilen Triethylamin versetzt. Das erhaltene Gemisch wurde 12 Stunden bei Raumtemperatur stehengelassen und anschließend filtriert, mit 0,5 %iger Natriumbicarbonatlösung gewaschen und im Vakuum eingedampft. Die Ausbeute betrug 56 %.

Eine 10 %ige Lösung des erhaltenen Harzsäureketens in Methylenchlorid wurde mit Hilfe einer Leimpresse auf eine Papierbahn aus Altpapier aufgetragen. Die erhaltene Imprägnierung war sowohl gegen Säuren als auch gegen Alkalien beständig.

Beispiel 3

A. Herstellung eines mit Acrylsäure modifizierten Kolophoniumharzes

Ein Gemisch aus 350 Gewichtsteilen Kolophoniumharz (Tallharz des Säurezahl 165) und 90 Gewichtsteilen Acrylsäure wurde 2 Stunden unter Rühren auf 160 °C und 2,5 Stunden auf 210 °C erhitzt. Nach Beendigung der Umsetzung ließ man auf Raumtemperatur abkühlen.

B. Herstellung des Säurechlorides des modifizierten Kolophoniumharzes

50 Gewichtsteile des unter A erhaltenen Harzes wurden nach der Arbeitsweise von Beispiel 1B mit 150 Gewichtsteilen Thionylchlorid versetzt und bis zur Beendigung der Gasentwicklung erwärmt. Anschließend wurde das überschüssige Chlorierungsmittel im Vakuum abgedampft.

C. Herstellung des Harzsäureketens

80 Gewichtsteile des unter B erhaltenen Harzsäurechlorides wurden in 150 Gewichtsteilen Toluol gelöst und mit 100 Gewichtsteilen Triethylamin versetzt. Das erhaltene Gemisch wurde 12 Stunden bei Raumtemperatur stehengelassen und anschließend filtriert, mit 0,5 %iger Natriumbicarbonatlösung gewaschen und im Vakuum eingedampft. Die Ausbeute betrug 50 %.

Eine 5 %ige Lösung des erhaltenen Harzsäureketens in Methylenchlorid wurde mit Hilfe einer Leimpresse auf eine Papierbahn aus Altpapier aufgetragen. Die erhaltene Imprägnierung war sowohl gegen Säuren als auch gegen Alkalien beständig.

**Ansprüche** (für die Vertragsstaaten : BE, CH, DE, FR, GB, IT, LI, LU, NL, SE)

1. Harzsäureketene, erhältlich durch Halogenierung eines mit einer carboxylgruppenhaltigen dienophilen Verbindung modifizierten Kolophoniums, dessen Gehalt an der als Addukt gebundenen carboxylgruppenhaltigen dienophilen Verbindung 1 bis 30 Gew.-% beträgt, und Abspaltung von Halogenwasserstoff aus dem erhaltenen Acylhalogenid.

2. Harzsäureketene nach Anspruch 1, dadurch gekennzeichnet, daß zu ihrer Herstellung eine Chlorierung des modifizierten Kolophoniums und eine Abspaltung von Chlorwasserstoff aus dem

Acylchlorid mit Hilfe eines tertiären Amins durchgeführt wird.

3. Harzsäureketene nach Anspruch 2, dadurch gekennzeichnet, daß zu ihrer Herstellung Thionylchlorid, Phosphortrichlorid oder Phosphorpentachlorid als Chlorierungsmittel verwendet wird.

4. Harzsäureketene nach einem der Ansprüche 1 bis 3, dadurch gekennzeichnet, daß zu ihrer Herstellung ein mit Maleinsäureanhydrid, Fumarsäure oder Acrylsäure, modifiziertes Kolophonium verwendet wird.

5. Verfahren zur Herstellung der Harzsäureketene nach den Ansprüchen 1 bis 4, dadurch gekennzeichnet, daß man ein mit einer carboxylgruppenhaltigen dienophilen Verbindung modifiziertes Kolophonium, dessen Gehalt an dem als Addukt gebundenen Modifizierungsmittel 1 bis 30 Gew.-% beträgt, in an sich bekannter Weise halogeniert und aus dem erhaltenen Acylhalogenid den Halogenwasserstoff abspaltet.

6. Verfahren nach Anspruch 5, dadurch gekennzeichnet, daß man ein mit 5 bis 15 Gew.-% Maleinsäureanhydrid modifiziertes Kolophonium mit Hilfe von Thionylchlorid chloriert, das überschüssige Thionylchlorid abdestilliert und das erhaltene Acylchlorid in einem organischen Lösungsmittel löst und unter Abspaltung von Chlorwasserstoff mit einem tertiären Amin zum Keten umsetzt.

7. Verfahren nach Anspruch 6, dadurch gekennzeichnet, daß man als Lösungsmittel Toluol und als tertiäres Amin Triethylamin verwendet.

8. Verwendung der Harzsäureketene nach einem der Ansprüche 1 bis 4 zur Hydrophobierung cellulosehaltiger Flächengebilde, insbesondere zur Leimung von Papier.

**Ansprüche** (für den Vertragsstaat AT)

1. Verfahren zur Herstellung von Harzsäureketenen, dadurch gekennzeichnet, daß man ein mit einer carboxylgruppenhaltigen dienophilen Verbindung modifiziertes Kolophonium, dessen Gehalt an der als Addukt gebundenen carboxylgruppenhaltigen dienophilen Verbindung 1 bis 30 Gew.-% beträgt, in an sich bekannter Weise halogeniert und aus dem erhaltenen Acylhalogenid den Halogenwasserstoff abspaltet.

2. Verfahren nach Anspruch 1, dadurch gekennzeichnet, daß man das modifizierte Kolophonium chloriert und aus dem Acylchlorid mit Hilfe eines tertiären Amins Chlorwasserstoff abspaltet.

3. Verfahren nach Anspruch 2, dadurch gekennzeichnet, daß man als Chlorierungsmittel Thionylchlorid, Phosphortrichlorid oder Phosphorpentachlorid verwendet.

4. Verfahren nach einem der Ansprüche 1 bis 3, dadurch gekennzeichnet, daß man ein mit Maleinsäureanhydrid, Fumarsäure oder Acrylsäure modifiziertes Kolophonium verwendet.

5. Verfahren nach einem der Ansprüche 1 bis 4, dadurch gekennzeichnet, daß man ein mit 5 bis 15 Gew.-% Maleinsäureanhydrid modifiziertes Kolophonium mit Hilfe von Thionylchlorid chloriert, das überschüssige Thionylchlorid abdestilliert und das erhaltene Acylchlorid in einem organischen Lösungsmittel löst und unter Abspaltung von Chlorwasserstoff mit einem tertiären Amin zum Keten umsetzt.

6. Verfahren nach Anspruch 5, dadurch gekennzeichnet, daß man als Lösungsmittel Toluol und als tertiäres Amin Triethylamin verwendet.

7. Verwendung der Verfahrensprodukte nach einem der Ansprüche 1 bis 6 zur Hydrophobierung cellulosehaltiger Flöchengebilde, insbesondere zur Leimung von Papier.

**Claims** (for the Contracting States : BE, CH, DE, FR, GB, IT, LI, LU, NL, SE)

1. Resin acid ketenes, obtainable by halogenation of a colophonium, modified with a carboxyl groups-containing dienophilic compound, the content of which in the as adduct bound carboxyl groups-containing dienophilic compound is 1 to 30 % by weight, and splitting off hydrogen halide from the obtained acyl halide.

2. Resin acid ketenes according to claim 1, characterized in that for their preparation a chlorination of the modified colophonium and a splitting off of hydrogen chloride from the acyl chloride with the aid of a tertiary amine is carried out.

3. Resin acid ketones according to claim 2, characterized in that for their preparation thionyl chloride, phosphorous trichloride or phosphorous pentachloride is used as chlorinating agent.

4. Resin acid ketenes according to one of claims 1 to 3, characterized in that for their preparation of colophonium modified with maleic anhydride is used.

5. Process for the preparation of the resin acid ketenes according to claims 1 to 4, characterized in halogenating a colophonium, modified with a carboxyl groups-containing dienophilic compound, the content of which in the as adduct bound modification agent is 1 to 30 % by weight, in a manner known per se and splitting off the hydrogen halide from obtained acyl halide.

6. Process according to claim 5, characterized in chlorinating a colophonium, modified with 5 to 15 % by weight of maleic anhydride, with the aid of thionyl chloride, distilling off the excess thionyl chloride, and dissolving the acyl chloride obtained in an organic solvent and reacting it with a tertiary amine into the ketene, splitting off hydrogen chloride.

7. Process according to claim 6, characterized in using toluene as solvent and triethyl amine as tertiary amine.

8. Use of the resin acid ketenes according to one of claims 1 to 4 for waterproofing cellulose-containing plane structures, particularly for sizing paper.

**Claims** (for the Contracting State AT)

1. Process for the preparation of resin acid ketenes, characterized in halogenating a colophonium, modified with a carboxyl groups-containing dienophilic compound, the content of which in the as adduct bound carboxyl groups-containing dienophilic compound is 1 to 30 % by weight, in a manner known per se and splitting off the hydrogen halide from the obtained acyl halide.

2. Process according to claim 1, characterized in chlorinating the modified colophonium and splitting off hydrogen chloride from the acyl chloride with the aid of a tertiary amine.

3. Process according to claim 2, characterized in using as chlorinating agent thionyl chloride, phosphorous trichloride or phosphorous pentachloride.

4. Process according to one of claims 1 to 3, characterized in using a colophonium modified with maleic anhydride, fumaric acid or acrylic acid.

5. Process according to one of claims 1 to 4, characterized in chorinating a colophonium, modified with 5 to 15 % by weight of maleic anhydride, with the aid of thionyl chloride, distilling off the excess thionyl chloride, and dissolving the acyl chloride obtained in an organic solvent and reacting it with a tertiary amine into the ketene, splitting off hydrogen chloride.

6. Process according to claim 5, characterized in using as solvent toluene and as tertiary amine triethyl amine.

7. Use of the process products according to one of claims 1 to 6 for waterproofing cellulose-containing plane structures, particularly for sizing paper.

**Revendications** (pour les Etats contractants : BE, CH, DE, FR, GB, IT, LI, LU, NL, SE)

1. Cétènes d'acides résiniques pouvant être obtenus par halogénation d'un colophane modifié avec un composé diénophile contenant des groupes carboxyle, dont la teneur en composé diénophile contenant des groupes carboxyle lié comme produit d'addition s'élève à 1 à 30 % en poids, et séparation d'acide halohydrique à partir de l'halogénure d'acyle obtenu.

2. Cétènes d'acides résiniques selon la revendication 1, caractérisés en ce que pour leur préparation on réalise une chloruration du colophane modifié et une séparation d'acide chlorhydrique à partir du chlorure d'acyle à l'aide d'une amine tertiaire.

3. Cétènes d'acides résiniques selon la revendication 2, caractérisés en ce qu'on utilise pour leur préparation du chlorure de thionyle, du trichlorure de phosphore ou du pentachlorure de phosphore comme agent de chloruration.

4. Cétènes d'acides résiniques selon l'une des revendications 1 à 3, caractérisés en ce qu'on utilise pour leur préparation un colophane modifié avec de l'anhydride de l'acide maléique, de l'acide fumarique ou de l'acide acrylique.

5. Procédé de préparation des cétènes d'acides résiniques selon les revendications 1 à 4, caractérisé en ce qu'on halogène de façon en elle-même connue un colophane modifié avec un composé diénophile contenant des groupes carboxyle, dont la teneur en agent modifiant lié comme produit d'addition s'élève à 1 à 30 % en poids, et en ce qu'on sépare l'acide halohydrique à partir de l'halogénure d'acyle obtenu.

6. Procédé selon la revendication 5, caractérisé en ce qu'on chlore un colophane modifié avec de 5 à 15 % en poids d'anhydride de l'acide maléique à l'aide de chlorure de thionyle, en ce qu'on sépare par distillation l'excès de chlorure de thionyle et en ce qu'on dissout le chlorure d'acyle obtenu dans un solvant organique et en ce qu'on le fait réagir avec une amine tertiaire avec séparation d'acide chlorhydrique pour donner le cétène.

7. Procédé selon la revendication 6, caractérisé en ce qu'on utilise comme solvant le toluène et comme amine tertiaire la triéthylamine.

8. Application des cétènes d'acides résiniques selon l'une des revendications 1 à 4 pour rendre hydrophobes des articles en nappe contenant de la cellulose, en particulier pour encoller du papier.

**Revendications** (pour l'Etat contractant AT)

1. Procédé de préparation des cétènes d'acides résiniques, caractérisé en ce qu'on halogène de façon en elle-même connue un colophane modifié avec un composé diénophile contenant des groupes carboxyle, dont la teneur en composé diénophile contenant des groupes carboxyle lié comme produit d'addition s'élève à 1 à 30 % en poids, et en ce qu'on sépare l'acide halohydrique à partir de l'halogénure d'acyle obtenu.

2. Procédé selon la revendication 1, caractérisé en ce qu'on réalise une chloruration du colophane modifié et une séparation d'acide chlorhydrique à partir du chlorure d'acyle à l'aide d'une amine tertiaire.

3. Procédé selon la revendication 2, caractérisé en ce qu'on utilise du chlorure de thionyle, du trichlorure de phosphore ou du pentachlorure de phosphore comme agent de chloruration.

4. Procédé selon l'une des revendications 1 à 3, caractérisé en ce qu'on utilise un colophane modifié avec de l'anhydride de l'acide maléique, de l'acide fumarique ou de l'acide acrylique.

5. Procédé selon l'une des revendications 1 à 4, caractérisé en ce qu'on chlore un colophane modifié avec de 5 à 15 % en poids d'anhydride de l'acide maléique à l'aide de chlorure de thionyle, en ce qu'on sépare par distillation l'excès de chlorure de thionyle et en ce qu'on dissout le chlorure d'acyle obtenu dans un solvant organique et en ce qu'on le fait réagir avec une amine tertiaire avec séparation d'acide chlorhydrique pour donner le cétène.

6. Procédé selon la revendication 5, caractérisé en ce qu'on utilise comme solvant le toluène et comme amine tertiaire la triéthylamine.

7. Application des produits du procédé selon l'une des revendications 1 à 6 pour rendre hydrophobes des articles en nappe contenant de la cellulose, en particulier pour encoller du papier.